# EUROPEAN PATENT SPECIFICATION

(11) **EP 2 700 913 B1**
(45) Date of publication and mention of the grant of the patent: **23.10.2019**
(21) Application number: 13179064.4
(22) Date of filing: 02.08.2013
(51) Int. Cl.: G01F 23/14

(54) **FUEL QUANTITY MEASUREMENT**
KRAFTSTOFFMENGENMESSUNG
MESURE DE LA QUANTITÉ DE CARBURANT

(30) Priority: 22.08.2012 GB 201214969
(43) Date of publication of application: 26.02.2014
(73) Proprietor: Airbus Operations Limited, Bristol BS34 7PA (GB)
(72) Inventor: Ward, Ian, BRISTOL, Bristol BS99 7AR (GB); Haskins, Richard, BRISTOL, Bristol BS99 7AR (GB)
(74) Representative: Paton, David William

(56) References cited:
- US-A- 1 742 084
- US-A- 4 289 027
- US-A- 5 138 559
- US-A1- 2011 215 077
- US-B1- 6 425 293

## Description

### FIELD OF THE INVENTION

The present invention relates to a method, device and apparatus for measuring the quantity (mass and/or volume) of fuel within a fuel tank, particularly a fuel tank supplying one or more engines of an aircraft.

### BACKGROUND OF THE INVENTION

It is typically necessary to be able to determine the amount of fuel within an aircraft fuel tank when the aircraft is on the ground. The aircraft may have on-board primary systems for measurement of fuel quantity, e.g. for use during flight, but such systems may not be suitable for use on the ground because they require the aircraft to be powered up so that it can supply the required electrical power. It is therefore typically necessary to have a secondary independent system for fuel quantity gauging which can operate when the aircraft is not powered up. Examples of scenarios where such a secondary system may be required include: when the primary system is considered to be faulty; during aircraft maintenance, in particular to check that there is no fuel within a fuel tank before entry by an operative; during recovery of an aircraft in which it is not possible to use the primary system to determine fuel quantity; and where it is necessary to meet aviation regulator requirements.

Known methods of determining fuel quantities when the aircraft is on the ground require multiple fuel tank penetration points, each of which has an associated device comprising a magnetic float which can move up or down a graduated measuring stick. By requiring multiple dedicated penetration points for each tank, such methods are expensive, add weight because of the local structural reinforcement around each penetration point, and represent possible leak paths from the tank. Moreover, there is a risk of the magnetic floats becoming detached and causing damage within the tank.

US4289027 discloses a device for both measuring fuel level and checking for water and/or other impurities in an aircraft fuel tank. US6425293 discloses a sensor plug with a plurality of sensors for sensing operating conditions of a gearbox.

### SUMMARY OF THE INVENTION

According to an aspect of the invention there is provided a method of determining a quantity of fuel within at least two fuel tanks having a different geometry as recited in claim 1.

Further, optional, features and method steps are recited in each of claims 2 to 5.

According to another aspect of the invention there is provided equipment for determining a quantity of fuel within at least two fuel tanks as recited in claim 6.

Further, optional, features are recited in each of claims 7 to 11.

According to another aspect of the invention there is provided apparatus for determining a quantity of fuel within at least two fuel tanks as recited in claim 12.

Further, optional, features are recited in each of claims 13 and 14.

In this way, the existing tank penetration point provided by the drain valve can be used for the purposes of determining fuel quantity. The drain valve can thus be used for its usual purposes of enabling unwanted water within the tank to be drained from the tank, and can also be used for the novel purpose of fuel quantity measurement.

Since the drain valve is located at a lower boundary of the fuel tank, typically the lowermost point of that lower boundary, the pressure measured by the pressure sensor can be used to calculate the depth of fuel at the drain valve location. The fuel volume can then be calculated using known information about or relating to the fuel tank geometry. The information relating to the fuel tank geometry may, for example, be in the form of a look-up table which takes account of the geometry of the fuel tank when converting the measured pressure into a quantity of fuel or one or more conversion equations which take account of the geometry of the fuel tank when converting the measured pressure into a quantity of fuel.

The interconnection may be achieved by inserting a portion of the probe into a corresponding portion of the drain valve. The method preferably includes the further step of disconnecting/removing the pressure measurement probe, thereby causing the drain valve to close. That is, the drain valve closes automatically on disconnection /removal of the pressure measurement probe.

The pressure sensor may be provided within the pressure measurement probe or may be arranged remote from, but interconnected with, the probe. The pressure sensor may come into direct contact with the fuel, i.e. be wetted by the fuel, or may alternatively be indirectly able to detect the pressure of the fuel via, for example, a flexible membrane or movable plate in contact with the fuel. In some embodiments the sensor may be further separated from the fuel by an intermediate fluid.

The step of using the measured pressure to determine the quantity of fuel within the tank may include one of: consulting a look-up table comprising a matrix of corresponding pressures and fuel quantities for said fuel tank; and using one or more conversion equations. The look-up table and/or conversion equations may be stored within a memory of a calculation module arranged to receive pressure measurements from the pressure sensor and to calculate the fuel quantity using the look-up table or one or more conversion equations. Alternatively, the fuel quantity may be determined manually using either method step.

The identifier, such as a name or code associated with the tank, may be associated with a particular look-up table or particular set of one or more conversion equations. Thus, the user may first detect the identifier, and then select a look-up table/conversion equation(s) with which to calculate the fuel quantity.

The step of detecting an identifier associated with said fuel tank may include interrogating an identification device attached to said fuel tank. The identification device may comprise any automatic identification device such as a barcode, RFID tag, matrix barcode, or similar. The identification device may be interrogated using an identification scanner arranged to detect such devices.

The method may include detecting a temperature of either fuel within said fuel tank or air external to said fuel tank, and the step of determining the quantity of fuel within the tank may include using the detected temperature and measured pressure to determine the quantity of fuel. Thus, variations in fuel volume as a result of temperature variations can be accounted for.

The method may further include detecting an attitude (i.e. stance or orientation, e.g. roll, pitch etc.) of said fuel tank, and the step of determining the quantity of fuel within the tank may include using the detected attitude and measured pressure to determine the quantity of fuel. Thus, the calculation of fuel quantity can take account of changes in the geometry of the fuel tank caused by a change in its orientation.

The method may include interconnecting a drain probe with the drain valve to drain some or all of the fuel from the fuel tank. Thus, the drain valve may be used for its usual purpose of draining fuel and/or water from the tank. A suitable drain probe and corresponding drain valve is described in US2011/0215077.

The fuel tank is preferably arranged to supply fuel to one or more engines of an aircraft. Most preferably, the fuel tank is located within a wing or fuselage of said aircraft.

The pressure measurement probe preferably includes a protruding member arranged to engage the drain valve (e.g. to be inserted into the drain valve) to provide the interconnection between the pressure measurement probe and the drain valve. Thus, the interconnection can easily be achieved by simply urging the protruding member into engagement with the drain valve until fuel is released from the drain valve into contact with the pressure sensor.

The device preferably includes a fuel duct arranged to provide fluid communication between the drain valve and the pressure sensor when the pressure measurement probe is interconnected with the drain valve. In this way, fuel can travel from the fuel tank to the pressure sensor via the fuel duct, and the pressure sensor may be located at a distance from the interconnecting surfaces at which it is protected from possible damage arising from the interconnection.

The pressure sensor may include a membrane, such as a flexible diaphragm or movable plate, arranged to directly contact the fuel within the tank. In this way, a pressure transducer or other sensing means within the sensor may not contact the fuel directly, but may instead be indirectly able to detect the pressure of the fuel via the membrane. In some embodiments the sensor may further include a chamber containing an intermediate fluid, the membrane providing a portion of a boundary of the chamber. Thus, the pressure sensor may be able to indirectly detect the fuel pressure via the membrane and intermediate fluid.

The pressure sensing device may be provided within the pressure measurement probe or may be arranged remote from, but interconnected with, the probe.

The device may include a power source arranged to provide operating power to the pressure measurement probe and/or pressure sensor. Such a power source enables the device to operate independently of the aircraft power systems, which may be crucial in certain aircraft maintenance or recovery situations.

The device may include a computation module arranged to convert a measured pressure from the pressure sensor into the quantity of said fuel. The computation module may include a memory in which is stored one or more look-up tables and/or one or more conversion equations which it can consult in order to perform the conversion.

Such a device may include an identity detection module arranged to interrogate an identification device of the fuel tank to determine an identify of the fuel tank, wherein the computation module is arranged to receive from the identity detection module identification data indicative of a detected identity of the fuel tank, and to use that identification data to convert the measured pressure into the quantity of said fuel. Thus, the device may be able to determine fuel quantities for multiple different types of fuel tank. An example may be the multiple differently shaped and sized fuel tanks of an aircraft wing. The identity detection module may be able to identify both the aircraft type (e.g. Airbus A320) and the particular fuel tank (e.g. centre tank) associated with that identity.

Such a device may also include a temperature sensor arranged to detect a temperature of either fuel within the fuel tank or air external to the fuel tank, wherein the computation module is arranged to receive from the temperature sensor temperature data indicative of a detected temperature, and to use that temperature data to convert the measured pressure into the quantity of said fuel. Thus, the device may be able to compensate for fuel volume variations caused by temperature variations. The temperature sensor may be positioned on the pressure measurement probe and be arranged to come into contact with the fuel within the tank when the probe is interconnected with the drain valve in order to measure the temperature of the fuel.

The computation module may be arranged to receive attitude data indicative of an attitude (e.g. roll, pitch, etc.) of the fuel tank, and may be arranged to use that attitude data to convert the measured pressure into the quantity of said fuel. The attitude data may be transmitted by an external source such as an aircraft system.

The computation module is preferably arranged to calculate an error band representative of an accuracy of the determined quantity of said fuel. That is, the error band may be representative of a statistical distribution associated with the determined quantity.

The quantity calculation means may comprise at least one of: a look-up table comprising a matrix of corresponding pressures and fuel quantities for said fuel tank; and one or more conversion equations. The look-up table and/or equation(s) may be stored within a memory of a computation module and used by the computation module to determine the quantity of fuel. Alternatively, if the fuel quantity is to be determined manually, the quantity calculation means may comprise physical or electronic copies of a look-up table and/or conversion equation(s) which may be used by an operator.

The device is preferably for determining a quantity of fuel within a fuel tank arranged to supply fuel to one or more engines of an aircraft, most preferably a fuel tank within a wing or fuselage of the aircraft.

The quantity calculation means preferably comprises one of: a look-up table comprising a matrix of corresponding pressures and fuel quantities for said fuel tank; and a computation module arranged to receive a measured pressure from the pressure sensor and to use that measured head of pressure to calculate the fuel quantity.

The drain valve preferably also has an open configuration in which it permits draining of fuel from the fuel tank through the drain valve. The apparatus may include a drain device adapted to interconnect with the drain valve to urge the drain valve to the open configuration, the drain device optionally having a sampling container arranged to collect a sample volume of fuel draining from the fuel tank via the drain valve. A suitable drain probe and corresponding drain valve is described in US2011/0215077. The apparatus is preferably for determining a quantity of fuel within a fuel tank arranged to supply fuel to one or more engines of an aircraft, most preferably a fuel tank within a wing or fuselage of the aircraft.

Any of the optional features of the invention discussed herein may be applied to any of the aspects of the invention, either singly or in any combination.

### BRIEF DESCRIPTION OF THE DRAWINGS

Embodiments of the invention will now be described with reference to the accompanying drawings, in which:
Fig. 1 is a schematic isometric view illustrating the multiple fuel tanks of an aircraft wing, and their respective drain valve locations;
Fig. 2 is a schematic cross-sectional front view showing a single wing fuel tank and a fuel quantity measurement device according to an embodiment of the present invention interconnected with the drain valve of that fuel tank;

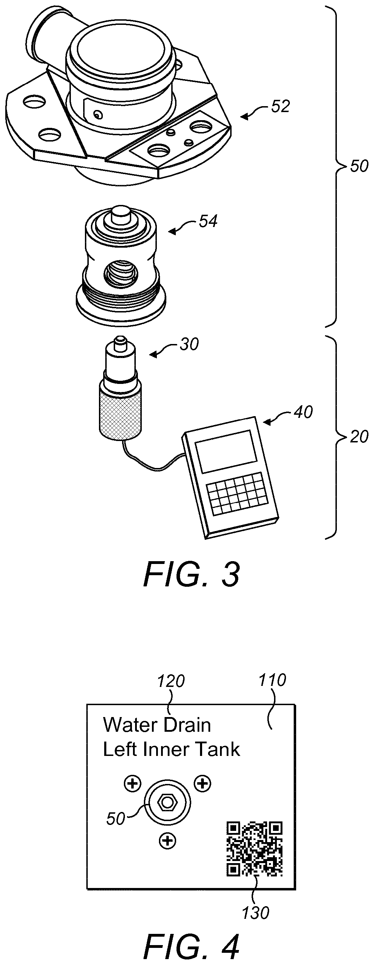

Fig. 3 is an exploded view showing the various component parts of a fuel quantity apparatus according to an embodiment of the invention;
Fig. 4 shows a schematic detail view of a water drain valve and fuel tank identifiers;
Fig. 5 shows a process flow chart illustrating a method of fuel quantity measurement according to an embodiment of the invention;
Fig. 6A shows a known drain valve in a first closed configuration;
Fig. 6B shows the drain valve of Fig. 6A in a second closed configuration; and
Fig. 6C shows the drain valve of Figs. 6A and 6B interconnected with a fuel quantity measurement device according to an embodiment of the invention to provide a measurement configuration.

### DETAILED DESCRIPTION OF EMBODIMENT(S)

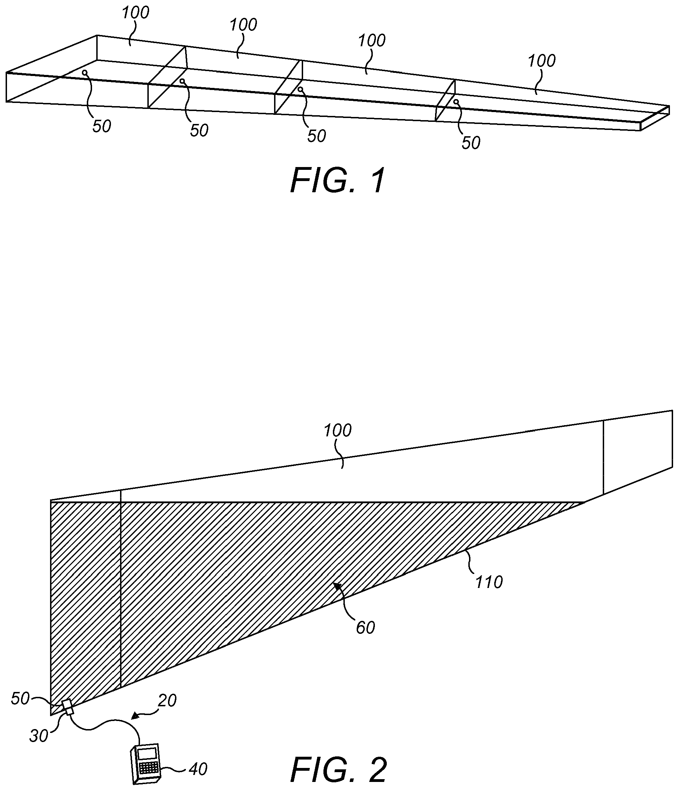

As indicated in Fig. 1, an aircraft wing includes multiple fuel tanks 100. Each fuel tank 100 includes a drain valve 50 (also known as a water drain valve or sump maintenance valve) at the generally lowermost point of the lower tank boundary, as shown in Fig. 2. The drain valves 50 are known devices which are typically used to drain any unwanted water from the fuel 60 in the tank 100. As a result of the differences between the densities of aviation fuel and water, any water within the tank 100 will collect at the lowermost point of the lower tank boundary, from where it can be removed via the drain valve 50. Drain valves 50 are also typically used to drain the tank 100 of fuel 60, for example during aircraft maintenance or before recovery of the aircraft after an accident.

The present invention proposes using the existing drain valves 50 of an aircraft wing for the purposes of fuel quantity measurement. A suitable drain valve 50 for use in the described embodiment is the D16100 Water Drain Valve produced by Intertechnique™. The description herein relates to such a drain valve, but does not extend to a detailed description of the features and operation of this device since such devices are well known and can be supplied in many and varied formats.

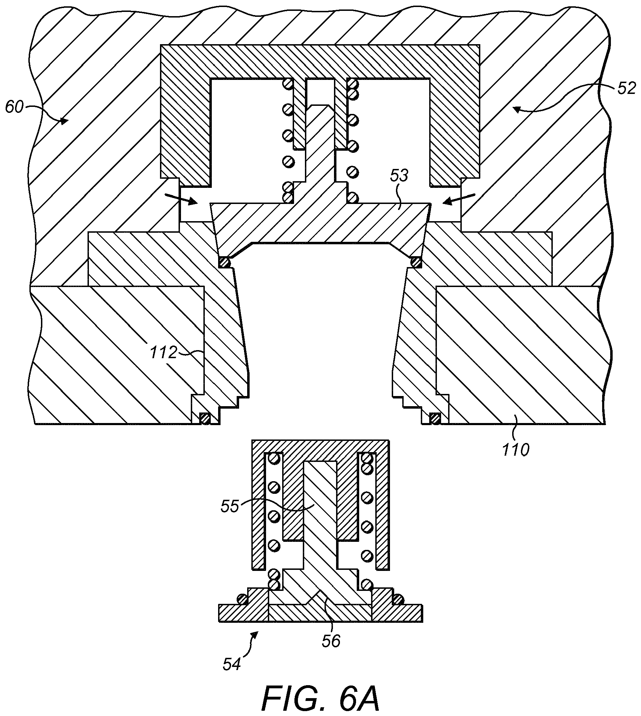

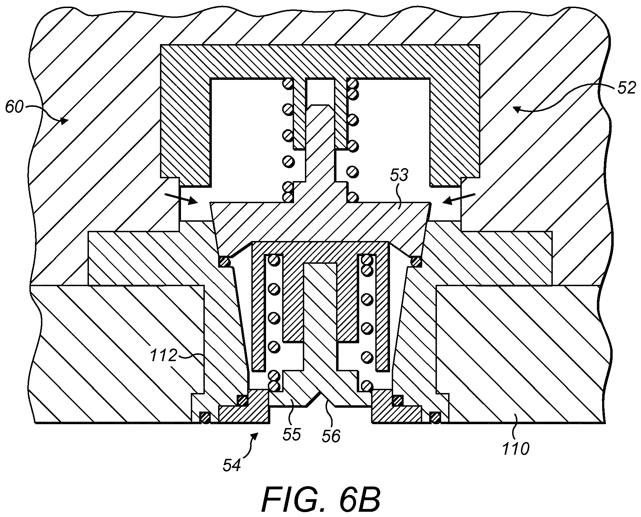

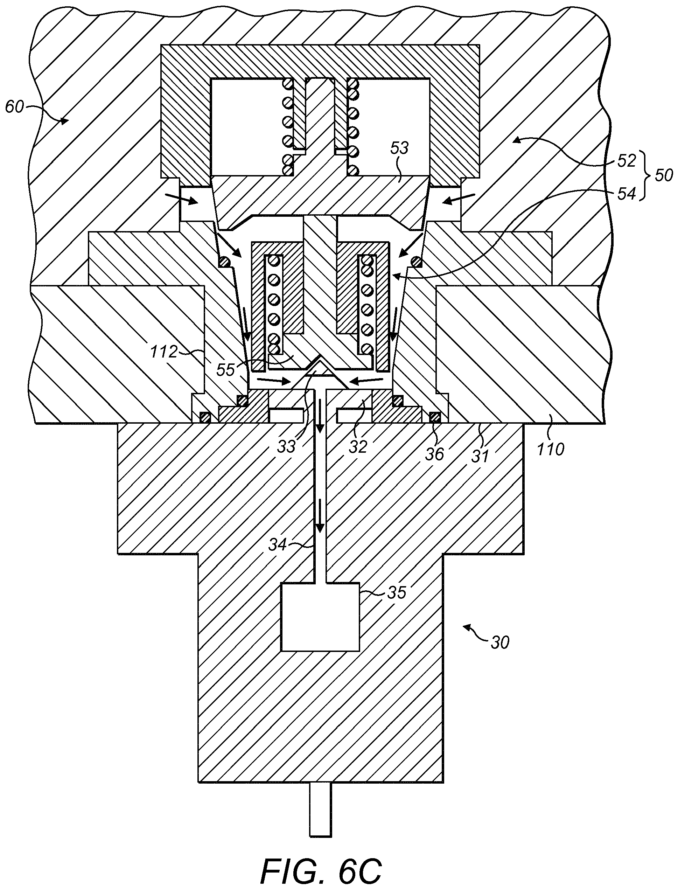

Each drain valve 50 of the present embodiment can move between a first closed configuration (Fig. 6A); a second closed configuration (Fig. 6B); and a measurement configuration (Fig. 6C) in which fuel pressure measurements can be obtained. The drain valves 50 also each have an open configuration (not shown) in which fuel can be drained from the tank 100.

The drain valve 50 includes a drain valve canister 52 (also known as the inner valve) which has a portion which extends through an opening 112 in the fuel tank lower skin 110. A movable stopper 53 is biased towards a closed position (as shown in Fig. 6A) in which it seals the opening 112 to prevent fuel escaping from the tank 100 via the drain valve 50. This closed position provides the first closed configuration of the drain valve 50.

Each drain valve 50 also includes a drain valve element 54 (also known as the outer valve) which can be inserted into the drain valve canister 52 to cause the stopper 53 of the drain valve canister 52 to move to an open position (as shown in Fig. 6B) in which fuel can surround and enter the drain valve element 54. The drain valve element 54 has a movable plunger 55 which is biased towards a closed position (as shown in Figs. 6A&B) before and during insertion, the closed position preventing fuel within the valve element 54 from exiting the valve element 54, and thereby preventing fuel escaping from the tank 100 via the drain valve 50. This closed position provides the second closed configuration of the drain valve.

A fuel quantity measurement device 20 includes a drain valve interface module 30 and a hand-held user interface module 40. The drain valve interface module 30 has a generally planar circular interface surface 31, from the centre of which extends a probe member 32. The probe member 32 has a conical protrusion 33 at its tip which is arranged to be seated in a correspondingly shaped recess 56 of the drain valve element 54. By seating the protrusion 33 of the drain valve interface module 30 in the recess 56 and pushing the drain valve interface module 30 towards the drain valve 50 until the interface surface 31 abuts the lower surface of the fuel tank lower skin 110 (see Fig. 6C), the plunger 55 of the drain valve element 54 is moved to an open position (as shown in Fig. 6C). In this open position, fuel is able to travel from the drain valve element 54 into a fuel duct 34 of the drain interface module 30 via one or more openings in the probe member 32. This arrangement provides the measurement configuration of the drain valve. The probe member 32 is shaped to seal the drain valve element 54 so as to prevent fuel to escape from the drain valve element 54 other than via the fuel duct 34, and a seal 36 between the interface surface 31 and the drain valve 50 provides a secondary defence against fuel leaks.

The fuel duct 34 supplies fuel to a pressure transducer 35 within the drain valve interface module 30. Thus, in the measurement configuration, there is a direct fuel path between the pressure transducer 35 and the fuel 60 within the tank 100. The pressure transducer 35 is therefore able to measure a pressure applied by the fuel 60 at the transducer 35. The transducer 35 may be an electrical or optical sensor, and in the present embodiment is required to have an accuracy of about 0.0005 psi (approximately 0.0000345 bar).

The user interface module 40 is able to receive a pressure measured by the transducer 35, and convert it into a quantity measurement indicating the quantity (volume or mass) of fuel 60 within the tank 100. Since pressure has a known relationship to the height of a head of fuel, the depth of fuel at the drain valve location can be easily determined. By knowing the geometry of a particular tank 100, that single fuel depth dimension can be used to calculate the fuel volume. Thus, the amount of fuel within the tank can be calculated from a single pressure measurement.

The user interface module 40 can be used to calculate the quantity of fuel within any one of a number of differently shaped tanks. Each of these tanks has an associated identity, which will typically refer to a particular fuel tank 100 within a particular aircraft type (e.g. Airbus A320 centre fuel tank). The user may ascertain the tank identity by reading an indicator 120 marked on the aircraft, near to the drain valve 50, and then input that tank identity into the user interface module 40 manually. Alternatively, the module may incorporate a scanner (not shown) or similar device for interrogating an identity code 130 marked on the aircraft, near to the drain valve 50. The user interface module 40 has a memory database (not shown) within which it stores pressure-to-quantity conversion information for each of a plurality of different tank identities, and is able to interrogate its memory database for the conversion information for an input/detected tank identity. The conversion information for each tank identity may comprise a look-up table (not shown) containing an array of fuel pressures and corresponding fuel quantities. Alternatively, the conversion information may comprise a set of conversion equations to be used to perform the conversion.

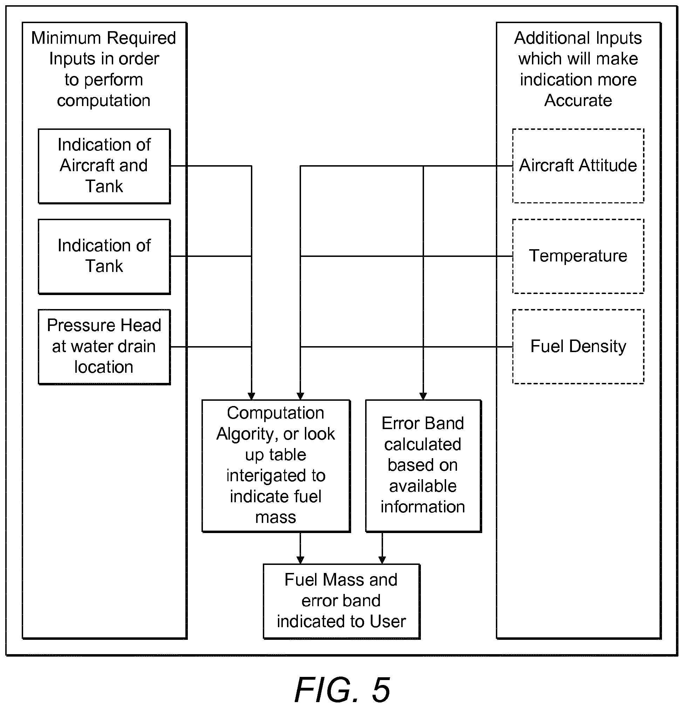

In addition to the pressure measurement and tank identity, the user interface module 40 may receive other inputs as shown in Fig. 5. For example, the module 40 may receive information concerning the aircraft attitude (e.g. pitch and roll; such information may be supplied directly by other aircraft systems), the temperature of the fuel 60 (the drain valve interface module 30 may incorporate a temperature sensor to provide this information), the air temperature, and/or the fuel density. Such additional information may be used to improve the accuracy of the quantity calculation.

The user interface module 40 outputs, via a display, a determined fuel quantity and an error band indicating a statistical distribution within which the actual quantity is believed to lie, based on the quality/accuracy of the input data.

In some embodiments the user interface module does not perform any calculations or conversions, but instead only provides a pressure measurement. In such embodiments the user must identify the tank 100, locate the correct look-up conversion table for that tank identity, and use the look-up table to determine a fuel quantity corresponding to the measured pressure. The look-up table may include information concerning adjustments to be made for aircraft attitude, fuel/air temperature, and/or fuel density.

Although the described embodiments concern aircraft fuel tanks, the invention may be applied to other types of fuel tank which incorporate drain valves. Examples of such fuel tanks include the fuel tanks of ships, trains, or other vehicles, or may include a fuel tank for supplying a domestic or industrial boiler.

Although the invention has been described above with reference to one or more preferred embodiments, it will be appreciated that various changes or modifications may be made without departing from the scope of the invention as defined in the appended claims.

## Claims

1. A method of determining a quantity of fuel within multiple fuel tanks (100) including fuel tanks having different geometries, each fuel tank having a drain valve (50) penetrating a lower boundary (110) of the fuel tank, the method including:
interconnecting a pressure measurement probe (30) with the drain valve (50) of any one of the multiple fuel tanks to permit direct or indirect contact between a pressure sensor (35) associated with said probe and fuel within said fuel tank;
measuring a pressure of the fuel in said fuel tank with the pressure sensor (35);
detecting an identifier (120) associated with said fuel tank;
using the detected identifier associated with said fuel tank to determine information relating to the geometry of said fuel tank;
using the measured pressure and determined information relating to the geometry of said fuel tank to determine the quantity of fuel within said fuel tank; and
disconnecting the pressure measurement probe (30) with the drain valve (50) of said fuel tank.

2. A method according to claim 1, wherein the step of using the measured pressure and information relating to the geometry of the fuel tank to determine the quantity of fuel within the tank includes one of: consulting a look-up table comprising a matrix of corresponding pressures and fuel quantities for said fuel tank; and using one or more conversion equations.

3. A method according to claim 1 or claim 2, wherein the step of detecting an identifier associated with said fuel tank includes interrogating an identification device (130) attached to said fuel tank.

4. A method according to any of claims 1 to 3, including interconnecting a drain probe with the drain valve to drain some or all of the fuel from the fuel tank.

5. A method according to any of claims 1 to 4, wherein the fuel tank is arranged to supply fuel to one or more engines of an aircraft.

6. Equipment for determining a quantity of fuel within multiple fuel tanks (100) including a first fuel tank having a geometry and a second fuel tank having a different geometry, each fuel tank having a drain valve (50) penetrating a lower boundary (110) of the fuel tank, the equipment comprising: a device (30) including a pressure measurement probe (32), a pressure sensor (35), the pressure measurement probe being adapted to interconnect with the drain valve of the first fuel tank to permit direct or indirect contact between the pressure sensor and fuel within the first fuel tank; the device being adapted to detect an identifier (120) associated with the first fuel tank, and adapted to use the detected identifier associated with the first fuel tank to determine information relating to the geometry of the first fuel tank, the equipment comprising quantity calculation means 40 adapted to generate a value indicative of the quantity of fuel within the first fuel tank using a pressure measured by the pressure sensor and the determined information relating to the geometry of the first fuel tank, the pressure measurement probe being adapted disconnect from the drain valve of the first fuel tank and to interconnect with the drain valve of the second fuel tank to permit direct or indirect contact between the pressure sensor and fuel within the second fuel tank; the device being adapted to detect an identifier (120) associated with the second fuel tank, and adapted to use the detected identifier associated with the second fuel tank to determine information relating to the geometry of the second fuel tank, the quantity calculation means (40) being adapted to generate a value indicative of the quantity of fuel within the second fuel tank using a pressure measured by the pressure sensor and the determined information relating to the geometry of the second fuel tank.

7. Equipment according to claim 6, including a fuel duct arranged to provide fluid communication between the drain valve and the pressure sensor when the pressure measurement probe is interconnected with the drain valve.

8. Equipment according to claim 6 or claim 7, including a computation module arranged to convert a measured pressure from the pressure sensor into the quantity of said fuel.

9. Equipment according to claim 8, including an identity detection module arranged to interrogate an identification device (130) of each fuel tank to determine an identity of each fuel tank, wherein the computation module is arranged to receive from the identity detection module identification data indicative of a detected identity of each fuel tank, and to use that identification data to convert the measured pressure into the quantity of said fuel.

10. Equipment according to any of claims 6 to 9, wherein the quantity calculation means comprises at least one of: a look-up table comprising a matrix of corresponding pressures and fuel quantities for each said fuel tank; and one or more conversion equations.

11. Equipment according to any of claims 6 to 10, wherein each fuel tank is arranged to supply fuel to one or more engines of an aircraft.

12. Apparatus for determining a quantity of fuel within at least two fuel tanks (100), the apparatus including:
a drain valve (50) penetrating a lower boundary (110) of each of the fuel tanks (100), the drain valve being biased towards a closed configuration in which fuel is prevented from flowing through the drain valve;
equipment according to any of claims 6 to 11, wherein the pressure measurement probe (32) is adapted to interconnect with the drain valve (50) of each fuel tank to urge the drain valve to a measurement configuration in which fuel is permitted to flow within the drain valve to directly or indirectly contact the pressure sensor (35) and thereby permit measurement of a pressure of the fuel.

13. Apparatus according claim 12, including a drain device adapted to interconnect with the drain valve to urge the drain valve to the open configuration, the drain device optionally having a sampling container arranged to collect a sample volume of fuel draining from the fuel tank via the drain valve.

14. Apparatus according to claim 12 or claim 13, wherein each fuel tank is arranged to supply fuel to one or more engines of an aircraft.

## Patentansprüche

1. Verfahren zum Bestimmen einer Menge an Kraftstoff in mehreren Kraftstofftanks (100), enthaltend Kraftstofftanks mit unterschiedlichen Geometrien, wobei jeder Kraftstofftank ein Ablassventil (50) aufweist, welches eine untere Begrenzung (110) des Kraftstofftanks durchdringt, wobei das Verfahren enthält:
Verbinden eines Druckmessfühlers (30) mit dem Ablassventil (50) eines der mehreren Kraftstofftanks, um einen direkten oder indirekten Kontakt zwischen einem zum Messfühler gehörenden Drucksensor (35) und Kraftstoff in dem Kraftstofftank zu ermöglichen,
Messen eines Drucks des Kraftstoffs in dem Kraftstofftank mit dem Drucksensor (35),
Erfassen einer zu dem Kraftstofftank gehörenden Kennung (120),
Verwenden der zu dem Kraftstofftank gehörenden erfassten Kennung, um Information betreffend die Geometrie des Kraftstofftanks zu ermitteln,
Verwenden des gemessenen Drucks und der ermittelten Information bezüglich der Geometrie des Kraftstofftanks, um die Menge an Kraftstoff in dem Kraftstofftank zu ermitteln, und
Trennen des Druckmessfühlers (30) von dem Ablassventil (50) des Kraftstofftanks.

2. Verfahren nach Anspruch 1, wobei der Schritt des Verwendens des gemessenen Drucks und der ermittelten Information bezüglich der Geometrie des Kraftstofftanks, um die Menge an Kraftstoff in dem Tank zu ermitteln, das Heranziehen einer Nachschlagetabelle, umfassend eine Matrix von entsprechenden Drücken und Kraftstoffmengen für den Kraftstofftank, oder das Verwenden einer oder mehrere Umrechnungsgleichungen enthält.

3. Verfahren nach Anspruch 1 oder Anspruch 2, wobei der Schritt des Erfassens einer zu dem Kraftstofftank gehörenden Kennung das Abfragen einer an dem Kraftstofftank angebrachten Identifizierungsvorrichtung (130) enthält.

4. Verfahren nach einem der Ansprüche 1 bis 3, enthaltend das Verbinden einer Ablasssonde mit dem Ablassventil, um Kraftstoff aus dem Kraftstofftank teilweise oder vollständig abzulassen.

5. Verfahren nach einem der Ansprüche 1 bis 4, wobei der Kraftstofftank dazu beschaffen ist, Kraftstoff einem oder mehreren Triebwerken eines Flugzeugs zuzuführen.

6. Ausrüstung zum Bestimmen einer Menge an Kraftstoff in mehreren Kraftstofftanks (100), enthaltend einen ersten Kraftstofftank mit einer Geometrie und einem zweiten Kraftstofftank mit einer anderen Geometrie, wobei jeder Kraftstofftank ein Ablassventil (50) aufweist, welches eine untere Begrenzung (110) des Kraftstofftanks durchdringt, wobei die Ausrüstung umfasst: eine Vorrichtung (30), enthaltend einen Druckmessfühler (32) und einen Drucksensor (35), wobei der Druckmessfühler dazu beschaffen ist, sich mit dem Ablassventil des ersten Kraftstofftanks zu verbinden, um einen direkten oder indirekten Kontakt zwischen dem Drucksensor und Kraftstoff im ersten Kraftstofftank zu ermöglichen, wobei die Vorrichtung dazu beschaffen ist, eine zu dem ersten Kraftstofftank gehörende Kennung (120) zu erfassen, und dazu beschaffen ist, die zum ersten Kraftstofftank gehörende erfasste Kennung zu verwenden, um Information betreffend die Geometrie des ersten Kraftstofftanks zu ermitteln, wobei die Ausrüstung ein Mengenberechnungsmittel (40) umfasst, das dazu beschaffen ist, unter Verwendung eines vom Drucksensor gemessenen Drucks und der ermittelten Information bezüglich der Geometrie des ersten Kraftstofftanks einen Wert zu erzeugen, der die Menge an Kraftstoff im ersten Kraftstofftank angibt, wobei der Druckmessfühler dazu beschaffen ist, sich vom Ablassventil des ersten Kraftstofftanks zu trennen und mit dem Ablassventil des zweiten Kraftstofftanks zu verbinden, um einen direkten oder indirekten Kontakt zwischen dem Drucksensor und Kraftstoff im zweiten Kraftstofftank zu ermöglichen, wobei die Vorrichtung dazu beschaffen ist, eine zum zweiten Kraftstofftank gehörende Kennung (120) zu erfassen, und dazu beschaffen ist, die zum zweiten Kraftstofftank gehörende erfasste Kennung zu verwenden, um Information betreffend die Geometrie des zweiten Kraftstofftanks zu ermitteln, wobei das Mengenberechnungsmittel (40) dazu beschaffen ist, unter Verwendung eines vom Drucksensor gemessenen Drucks und der ermittelten Information bezüglich der Geometrie des zweiten Kraftstofftanks einen Wert zu erzeugen, der die Menge an Kraftstoff im zweiten Kraftstofftank angibt.

7. Ausrüstung nach Anspruch 6, enthaltend eine Kraftstoffleitung, die dazu beschaffen ist, eine Fließverbindung zwischen dem Ablassventil und den Drucksensor bereitzustellen, wenn der Druckmessfühler mit dem Ablassventil verbunden ist.

8. Ausrüstung nach Anspruch 6 oder Anspruch 7, enthaltend ein Berechnungsmodul, das dazu beschaffen ist, einen vom Drucksensor gemessenen Druck in die Menge des Kraftstoffs umzurechnen.

9. Ausrüstung nach Anspruch 8, enthaltend ein Identitätserfassungsmodul, das dazu beschaffen ist, eine Identifizierungsvorrichtung (130) eines jeden Kraftstofftanks abzufragen, um eine Kennung eines jeden Kraftstofftanks zu erfassen, wobei das Berechnungsmodul dazu beschaffen ist, vom Identitätserfassungsmodul Identifizierungsdaten aufzunehmen, die eine erfasste Identität eines jeden Kraftstofftanks angibt, und diese Identifizierungsdaten zu verwenden, um den gemessen Druck in die Menge an dem Kraftstoff umzurechnen.

10. Ausrüstung nach einem der Ansprüche 6 bis 9, wobei das Mengenberechnungsmittel eine Nachschlagetabelle, umfassend eine Matrix von entsprechenden Drücken und Kraftstoffmengen für jeden Kraftstofftank, oder eine oder mehrere Umrechnungsgleichungen umfasst.

11. Ausrüstung nach einem der Ansprüche 6 bis 10, wobei jeder Kraftstofftank dazu beschaffen ist, Kraftstoff einem oder mehreren Triebwerken eines Flugzeugs zuzuführen.

12. Vorrichtung zum Bestimmen einer Menge an Kraftstoff in wenigstens zwei Kraftstofftanks (100), wobei die Vorrichtung enthält:
ein Ablassventil (50), welches eine untere Begrenzung (110) eines jeden Kraftstofftanks (100) durchdringt, wobei das Ablassventil zu einer geschlossenen Konfiguration hin vorgespannt ist, in der Kraftstoff daran gehindert wird, durch das Ablassventil zu fließen,
eine Ausrüstung nach einem der Ansprüche 6 bis 11, wobei der Druckmessfühler (32) dazu beschaffen ist, sich mit dem Ablassventil (50) eines jeden Kraftstofftanks zu verbinden, um das Ablassventil in eine Messkonfiguration zu drängen, bei der es Kraftstoff ermöglicht wird, innerhalb des Ablassventils zu fließen, um mit dem Drucksensor (35) direkt oder indirekt in Kontakt zu kommen und dadurch die Messung eines Drucks des Kraftstoffs zu ermöglichen.

13. Vorrichtung nach Anspruch 12, enthaltend eine Ablassvorrichtung, die dazu beschaffen ist, sich mit dem Ablassventil zu verbinden, um das Ablassventil zu der offenen Konfiguration zu drängen, wobei die Ablassvorrichtung wahlweise einen Probenbehälter aufweist, der dazu beschaffen ist, ein Probenvolumen an Kraftstoff zu sammeln, der über das Ablassventil aus dem Kraftstofftank fließt.

14. Vorrichtung nach Anspruch 12 oder Anspruch 13, wobei jeder Kraftstofftank dazu beschaffen ist, Kraftstoff einem oder mehreren Triebwerken eines Flugzeugs zuzuführen.

## Revendications

1. Procédé utilisé pour déterminer une quantité de carburant à l'intérieur de multiples réservoirs de carburant (100) incluant des réservoirs de géométries différentes, chaque réservoir comportant une vanne de drainage (50) pénétrant dans une limite inférieure (110) du réservoir de carburant, ledit procédé incluant :
l'interconnexion d'une sonde de mesure de la pression (30) avec la vanne de drainage (50) de l'un quelconque des multiples réservoirs de carburant, pour permettre le contact direct ou indirect entre le capteur de pression (35) associé à ladite sonde et le carburant contenu dans ledit réservoir de carburant ;
la mesure de la pression de carburant dans ledit réservoir avec le capteur de pression (35) ;
la détection d'un identificateur (120) associé audit réservoir de carburant ;
l'utilisation de l'identificateur détecté associé audit réservoir de carburant pour déterminer les informations relatives à la géométrie dudit réservoir de carburant ;
l'utilisation de la pression mesurée et des informations déterminées concernant la géométrie dudit réservoir de carburant pour déterminer la quantité de carburant à l'intérieur dudit réservoir de carburant ; et
la déconnexion de la sonde de mesure de la pression (30) avec la vanne de drainage (50) dudit réservoir de carburant.

2. Procédé selon la revendication 1, dans lequel l'étape consistant à utiliser la pression mesurée et les informations relatives à la géométrie du réservoir de carburant pour déterminer la quantité de carburant à l'intérieur du réservoir inclut : la consultation d'une table de consultation comprenant la grille des pressions correspondantes et des quantités de carburant pour ledit réservoir de carburant ; et l'utilisation d'une ou de plusieurs équations de conversion.

3. Procédé selon la revendication 1 ou 2, dans lequel l'étape de détection d'un identificateur associé audit réservoir de carburant inclut l'interrogation d'un dispositif d'identification (130) attaché audit réservoir de carburant.

4. Procédé selon l'une quelconque des revendications 1 à 3, incluant l'interconnexion d'une sonde de drainage avec la vanne de drainage pour drainer une partie ou l'intégralité du carburant présent dans le réservoir de carburant.

5. Procédé selon l'une quelconque des revendications 1 à 4, dans lequel le réservoir de carburant est disposé pour alimenter en carburant un ou plusieurs moteurs d'un aéronef.

6. Équipement utilisé pour déterminer la quantité de carburant à l'intérieur de multiples réservoirs de carburant (100), incluant un premier réservoir de carburant ayant une géométrie et un deuxième réservoir de carburant ayant une géométrie différente, chaque réservoir de carburant comportant une vanne de drainage (50) pénétrant dans une limite inférieure (110) du réservoir de carburant, ledit équipement comportant : un dispositif (30) incluant une sonde de mesure de la pression (32), un capteur de pression (35), la sonde de mesure de la pression étant adaptée pour s'interconnecter avec la vanne de drainage du premier réservoir de carburant pour permettre un contact direct ou indirect entre le capteur de pression et le carburant contenu dans le premier réservoir de carburant ; le dispositif étant adapté pour détecter un identificateur (120) associé au premier réservoir de carburant, et adapté pour utiliser l'identificateur détecté associé au premier réservoir de carburant pour déterminer des informations relatives à la géométrie du premier réservoir de carburant, l'équipement comprenant un moyen de calcul de la quantité 40 adapté pour générer une valeur indicative de la quantité de carburant contenue dans le premier réservoir de carburant en utilisant la pression mesurée par le capteur de pression et les informations déterminées concernant la géométrie du premier réservoir de carburant, la sonde de mesure de la pression étant adaptée [pour] se déconnecter de la vanne de drainage du premier réservoir de carburant et pour s'interconnecter avec la vanne de drainage du deuxième réservoir de carburant pour permettre un contact direct ou indirect entre le capteur de pression et le carburant contenu dans le deuxième réservoir de carburant ; le dispositif étant adapté pour détecter un identificateur (120) associé au deuxième réservoir de carburant, et adapté pour utiliser l'identificateur détecté associé au deuxième réservoir de carburant pour déterminer les informations relatives à la géométrie du deuxième réservoir de carburant, le moyen de calcul de la quantité (40) étant adapté pour générer une valeur indicative de la quantité de carburant contenue dans le deuxième réservoir en utilisant la pression mesurée par le capteur de pression et les informations déterminées concernant la géométrie du deuxième réservoir de carburant.

7. Équipement selon la revendication 6, incluant une conduite de carburant disposée pour permettre la communication du fluide entre la vanne de drainage et le capteur de pression lorsque la sonde de mesure de la pression est interconnectée avec la vanne de drainage.

8. Équipement selon la revendication 6 ou 7, incluant un module de calcul pour convertir la pression mesurée par le capteur de pression en quantité dudit carburant.

9. Équipement selon la revendication 8, incluant un module de détection d'identité disposé pour interroger le dispositif d'identification (130) de chaque réservoir de carburant pour déterminer l'identité de chaque réservoir de carburant, dans lequel le module de calcul est disposé pour recevoir du module de détection d'identité les données d'identification indiquant l'identité détectée pour chaque réservoir de carburant, et pour utiliser ces données d'identification pour convertir la pression mesurée en quantité dudit carburant.

10. Équipement selon l'une quelconque des revendications 6 à 9, dans lequel le moyen de calcul de la quantité comprend au moins l'un des éléments suivants : une table de consultation comprenant une grille des pressions et des quantités de carburant correspondantes pour chacun desdits réservoirs de carburants ; et une ou plusieurs équations de conversion.

11. Équipement selon l'une quelconque des revendications 6 à 10, dans lequel chaque réservoir de carburant est disposé pour fournir du carburant à un ou plusieurs moteurs d'un aéronef.

12. Appareil utilisé pour déterminer la quantité de carburant contenue dans au moins deux réservoirs de carburant (100), l'appareil incluant :
une vanne de drainage (50) pénétrant dans la limite inférieure (110) de chacun des réservoirs de carburant (100), la vanne de drainage étant orientée dans le sens de la fermeture dans lequel le carburant ne peut pas s'écouler par la vanne de drainage ;
équipement selon l'une quelconque des revendications 6 à 11, dans lequel la sonde de mesure de pression (32) est adaptée pour s'interconnecter avec la vanne de drainage (50) de chaque réservoir de carburant pour positionner la vanne de drainage en configuration de mesure dans laquelle le carburant peut s'écouler par la vanne de drainage pour se trouver directement ou indirectement en contact avec le capteur de pression (35) permettant ainsi la mesure de la pression du carburant.

13. Appareil selon la revendication 12, comportant un dispositif de drainage adapté pour s'interconnecter avec la vanne de drainage pour positionner la vanne de drainage en configuration ouverte, le dispositif de drainage comportant en option un réservoir d'échantillonnage disposé pour collecter un échantillon du volume de carburant s'écoulant du réservoir de carburant par la vanne de drainage.

14. Appareil selon la revendication 12 ou la revendication 13, dans lequel chaque réservoir de carburant est disposé pour alimenter en carburant un ou plusieurs moteurs d'un aéronef.
